# EUROPÄISCHE PATENTSCHRIFT

(11) **EP 0 694 087 B1**
(45) Veröffentlichungstag und Bekanntmachung des Hinweises auf die Patenterteilung: **29.10.1997**
(21) Anmeldenummer: 94913512.3
(22) Anmeldetag: 01.04.1994
(51) Int. Cl.: C25B 1/30

(54) **VERFAHREN ZUR HERSTELLUNG VON ALKALIPEROXID-LÖSUNGEN**
METHOD OF PREPARING ALKALI-METAL PEROXIDE SOLUTIONS
PROCEDE DE PREPARATION DE SOLUTIONS DE PEROXYDES ALCALINS

(30) Priorität: 08.04.1993 DE 4311665
(43) Veröffentlichungstag der Anmeldung: 31.01.1996
(73) Patentinhaber: Metallgesellschaft AG, 60271 Frankfurt am Main (DE)
(72) Erfinder: HILLRICHS, Eilhard, D-63654 Büdingen (DE); KIENBERGER, Manfred, D-63128 Dietzenbach (DE); SANDER, Ulrich, D-61381 Friedrichsdorf (DE)
(86) Internationale Anmeldenummer: EP9401028
(87) Internationale Veröffentlichungsnummer: WO9424336

(56) Entgegenhaltungen:
- FR-A- 781 506
- US-A- 4 384 931

## Beschreibung

Die Erfindung betrifft ein Verfahren zur Herstellung von wäßriger alkalischer Peroxid-Lösung mit einem Alkali/H₂O₂-Molverhältnis von 0,5 bis 2,5 in einer elektrochemischen Zelle, die eine poröse Sauerstoff-Diffusions-Kathode mit Zufuhr von gasförmigem Sauerstoff, eine Anode und zwischen der Kathode und der Anode eine Kationenaustauscher-Membran aufweist, wobei sich in der Zelle zwischen der Kathode und der Membran eine einen wäßrigen Katholyten enthaltende Kathodenkammer und zwischen der Anode und der Membran eine einen wäßrigen Anolyten enthaltende Anodenkammer befindet, wobei an der Kathode Wasserstoffperoxid gebildet wird und aus der Kathodenkammer ein erster wäßriger Produktstrom abgezogen wird, der Alkalihydroxid und Wasserstoffperoxid enthält.

Ein solches Verfahren ist aus US-A-4 384 931 bekannt. Hierbei leitet man verdünnte Schwefelsäure im Kreislauf durch die Anodenkammer und füllt die Kathodenkammer zunächst mit einer wäßrigen NaOH-Lösung. Diese Lösung wird dann mehr und mehr mit Peroxid angereichert.

Peroxid-Lösungen gewinnen zunehmende Bedeutung als Oxidations- und Bleichchemikalien, da das aus dem Oxidationsmittel Peroxid entstehende Reaktionsprodukt Wasser die Umwelt nicht belastet. So werden z. B. alkalische wässrige Wasserstoffperoxid-Lösungen für die Zellstoff- und Papierbleichung verwendet.

In der US-Patentschrift 4,693,794 ist ein elektrochemisches Verfahren zur Herstellung von Wasserstoffperoxid beschrieben, bei dem Sauerstoff aus Luft, aus der das Kohlendioxid zuvor entfernt wurde, an einer Kathode, an der ein alkalischer Elektrolyt vorbeiströmt, zu Wasserstoffperoxid reduziert wird, wobei die elektrochemische Zelle durch eine Membran in Anodenkammer und Kathodenkammer getrennt ist.

In der US-Patentschrift 4,431,494 ist ein Verfahren zur Herstellung von alkalischen Peroxid-Lösungen auf elektrochemischem Weg beschrieben, das dadurch gekennzeichnet ist, daß die wässrige alkalische Elektrolyt-Lösung einen Komplexbildner oder ein Chelatisierungsmittel enthält, um die katalytische Wirkung von Verunreinigungen auf die Zersetzung von Peroxid zumindest teilweise zu unterdrücken.

In der US-Patentschrift 4,357,217 ist ein Verfahren zur Herstellung von Wasserstoffperoxid mit Hilfe einer elektrochemischen Zelle beschrieben, die aus drei Kammern besteht und in der eine wässrige saure Lösung zwischen der Anode und einer Kationenaustauscher-Membran strömt, in der eine wässrige alkalische Lösung zwischen einer Gasdiffusions-Kathode und einer Anionenaustauscher-Membran strömt und in der eine wässrige Lösung in der Mittelkammer strömt. Bei diesem Verfahren wird ein sauerstoffhaltiges Gas in die Gasdiffusions-Kathode geleitet und durch das Anlegen einer äußeren Spannung wird der Sauerstoff reduziert. Dadurch wird Peroxid im wässrigen alkalischen Katholyten gebildet und gleichzeitig Wasser im wässrigen alkalischen Anolyten unter Bildung von Wasserstoff-Ionen oxidiert. Die Wasserstoff-Ionen und die Peroxid-Ionen wandern durch die Membranen in die mittlere Kammer und reagieren zu Wasserstoffperoxid, welches aus dem Kreislauf entnommen wird.

Aufgabe der Erfindung ist es, ein variables Verfahren zur Herstellung von wäßriger alkalischer Peroxid-Lösung in einer elektrochemischen Zelle bereitzustellen, das mit verschiedenen Ausgangsstoffen arbeiten kann. Erfindungsgemäß gelingt dies beim eingangs genannten Verfahren dadurch, daß man aus einem außerhalb der Zelle angeordneten Zersetzungstank eine Alkalihydrogensulfat enthaltende wäßrige Lösung in die Anodenkammer leitet und daß man dem Zersetzungstank einen Teil des aus der Anodenkammer abgezogenen, Schwefelsäure enthaltenden Anolyten und einen Ausgangsstoff zuführt, wobei es sich bei dem Ausgangsstoff um eine wäßrige Lösung von
a) Alkalisulfat und/oder Alkalihydrogensulfat oder
b) Alkalisulfit und/oder Alkalihydrogensulfit oder
c) Alkalicarbonat und/oder Alkalihydrogencarbonat
handelt.

Beim Verfahren der Erfindung ist es vorteilhaft, daß die Einhaltung eines Alkali/H₂O₂-Molverhältnisses von kleiner als 2,5 und vorzugsweise kleiner 1,5 ermöglicht wird. Ein weiterer Vorteil der Verfahrensvarianten besteht darin, daß Salzlösungen - also Lösungen von Alkalisulfaten, Alkalisulfiten und Alkalicarbonaten - eingesetzt und daraus Alkalihydroxide gewonnen werden können. Schließlich haben die Verfahrensvarianten den Vorteil, daß aus den Alkalisulfaten Schwefelsäure gewonnen werden kann, während aus den Alkalisulfiten gasförmiges Schwefeldioxid und aus den Alkalicarbonaten gasförmiges Kohlendioxid zusätzlich gewonnen werden kann.

Vorzugsweise wird als Alkalisulfat Na₂SO₄ oder K₂SO₄, als Alkalihydrogensulfat NaHSO₄ oder KHSO₄, als Alkalisulfit Na₂SO₃ oder K₂SO₃, als Alkalihydrogensulfit NaHSO₃ oder KHSO₃, als Alkalicarbonat Na₂CO₃ oder K₂CO₃ und als Alkalihydrogencarbonat NaHCO₃ oder KHCO₃ eingesetzt.

Nach der Erfindung ist vorgesehen, daß dem Katholyt-Kreislauf eine wässrige Alkalicarbonat- und/oder Alkalihydrogencarbonat-Lösung zugeführt wird, wobei eine wässrige alkalische Alkalipercarbonat-Lösung oder ein Gemisch aus Alkaliperoxid- und Alkalipercarbonat-Lösung entsteht. Zweckmäßigerweise führt man dem Katholyt-Kreislauf Prozeßwasser zu und stellt damit die Konzentration der alkalischen Peroxid-Lösung ein.

Es kann sich empfehlen, dem Katholyt-Kreislauf ein Chelatisierungsmittel oder dessen Salze zuzugeben, mit dem Verunreinigungen an Metallionen in nichtionisierten Chelatkomplexen gebunden werden. Das Chelatisierungsmittel besteht z. B. aus Äthylendiamintetraessigsäure (EDTA) oder aus deren Alkalisalzen.

Es ist nach der Erfindung vorgesehen, dem Elektrolyt-Kreislaufstrom die Ausgangsprodukt-Lösung zuzugeben, um damit gleichzeitig die Konzentration der alkalischen Peroxid-Endprodukt-Lösung in vorteilhafter Weise einzustellen.

Der Sauerstoff-Diffusions-Kathode wird gemäß einer weiteren Ausgestaltung der Erfindung Luft zugeleitet, aus der das Kohlendioxid vorher entfernt worden ist. Die poröse Sauerstoff-Diffusions-Kathode kann z. B. ein Kohlenstoff-Gewebe oder Kohlenstoff-Vlies mit einer Beschichtung eines Gemisches aus Teflon und Ruß aufweisen. Als Anode kommt z. B. eine Sauerstoff entwickelnde Metallelektrode oder eine mit einem Katalysator beschichtete Metallelektrode infrage. Der an der Anode entstehende Sauerstoff kann zur Sauerstoff-Diffusions-Kathode geleitet werden.

Als Sauerstoff entwickelnde Metallelektrode wird gemäß einer weiteren Ausgestaltung der Erfindung eine mit Edelmetall-Katalysator aktivierte oder mit Bleidioxid beschichtete Titan-Elektrode oder eine Blei-Elektrode verwendet. Als Edelmetall zur Aktivierung der Titan-Elektrode kann z. B. Iridium oder Platin dienen.

Es ist ferner möglich, als Anode eine Wasserstoff-Diffusions-Anode zu verwenden, die ein Kohlenstoffgewebe oder Kohlenstoff-Vlies mit einem Gemisch aus Teflon, Ruß und Edelmetall aufweist und die mit einer protonendurchlässigen Membran gasdicht abgedeckt ist.

In weiterer Ausgestaltung der Erfindung wird in der Anodenkammer eine zusätzliche Anionenaustauscher-Membran eingesetzt und die Kammer zweigeteilt. Die Mittelkammer zwischen der Kationenaustauscher- und der Anionenaustauscher-Membran wird von einem Schwefelsäure und Natriumhydrogensulfat enthaltenden Elektrolyten durchströmt, während die an die Anode angrenzende Kammer von Schwefelsäure durchströmt wird, von der ein Teilstrom abgegeben wird.

Gemäß einer weiteren Ausführungsform der Erfindung ist es vorgesehen, daß in der Zelle an der Anodenseite zusätzlich eine Kationenaustauscher-Membran eingesetzt wird, daß die Anodenkammer von einem Schwefelsäure- und Natriumhydrogensulfat-haltigen Elektrolyt durchströmt wird und daß die Mittelkammer zwischen den beiden Kationenaustauscher-Membranen von der in der Kathodenkammer gebildeten alkalischen Peroxidlösung durchströmt wird, wodurch eine Reduzierung des Alkali/H₂O₂-Molverhältnisses erreicht wird.

Es ist nach der Erfindung vorgesehen, daß in dem Alkalihydrogensulfat enthaltenden Elektrolyten die Konzentration an freier Schwefelsäure zwischen 0 und 30 Gew.-% und die Konzentration an Alkalisulfat zwischen 1 und 35 Gew.-% liegt und daß die Stromdichte zwischen 0,5 und 3 kA/m² und vorzugsweise zwischen 1 und 2 kA/m² eingestellt wird. Dadurch wird im Katholyt-Kreislauf die Zusammensetzung der alkalischen Produkt-Lösung im Bereich zwischen 1 bis 5 mol/l Alkali-Gehalt und 0,4 bis 3 mol/l Peroxid-Gehalt gesteuert.

Beim erfindungsgemäßen Verfahren ist es ferner möglich, daß als Ausgangsstoff die wässrige Lösung eines Alkalisulfats und/oder Alkalihydrogensulfats, eines Alkalisulfits und/oder Alkalihydrogensulfits eingesetzt wird, die Soda enthält. Dabei kann die sodahaltige Lösung durch mehrwertige Kationen und sonstige mineralische Komponenten verunreinigt sein und einen pH-Wert von 8 bis 13 sowie eine Salzkonzentration zwischen 10 Gew.-% und der Löslichkeitsgrenze des Ausgangsstoffs aufweisen. Die wäßrige Lösung des Ausgangsstoffs wird vor dem Einleiten in den Zersetzungstank filtriert, das Filtrat wird mit einem pH-Wert von 8 bis 13 über einen selektiven Kationenaustauscher zur Absorption von zwei- und mehrwertigen Kationen geleitet und dann wird die Lösung dem Zersetzungstank zugeführt. Dem Zersetzungstank wird gleichzeitig der aus der elektrochemischen Zelle kommende schwefelsäurehaltige Anolyt zugeführt, und nach einer Schwefeldioxid- und/oder Kohlendioxid-Entgasung wird die gebildete Alkalisulfat und Alkalihydrogensulfat enthaltende schwefelsaure Lösung als Anolyt in die elektrochemische Zelle geleitet.

In weiterer Ausgestaltung der Erfindung ist vorgesehen, daß als Ausgangsstoff für die Herstellung der sodahaltigen Lösung ein sodahaltiges Mineral oder der sodahaltige Feststoff verwendet wird, der bei einer thermischen Zersetzung von einer zum Bleichen von Papier oder Zellstoff eingesetzten Peroxid-Bleichlauge anfällt.

Der Gegenstand der Erfindung wird nachfolgend anhand der Zeichnungen (Fig. 1 bis 4) näher erläutert.

Fig.1 zeigt die Elektrolysezelle mit den dazugehörigen Leitungen und einem Zersetzungstank.

Fig. 2 zeigt eine Elektrolysezelle ähnlich Fig. 1.

Fig. 3 zeigt eine Elektrolysezelle mit einer zweigeteilten Anodenkammer und

Fig. 4 zeigt eine Elektrolysezelle mit einer zweigeteilten Kathodenkammer.

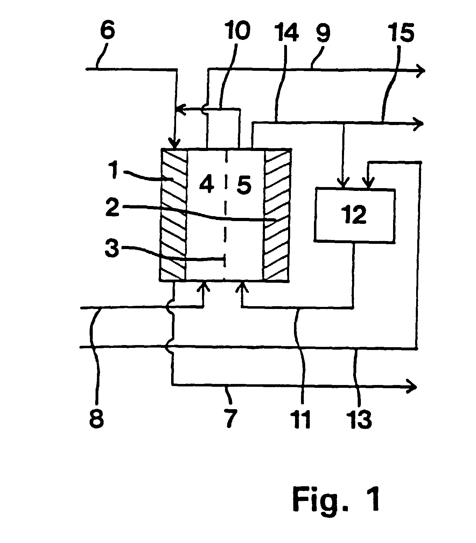

In Fig. 1 ist eine Elektrolysezelle dargestellt, die aus einer Sauerstoff-Diffusions-Kathode (1), einer Anode (2) und einer Kationenaustauscher-Membran (3) besteht. Die Zelle ist durch die Membran (3) in eine Kathodenkammer (4) und eine Anodenkammer (5) geteilt. Die Kathode ist zusammengesetzt aus zwei Nickel-Lochblechen, zwischen die ein ca. 0,4 mm dickes, poröses Kohlenstoffgewebe gepreßt ist, das mit einem Teflon/Ruß-Gemisch beschichtet ist. An die Rückseite dieser Sauerstoff-Diffusions-Kathode (1) wird Sauerstoff oder Luft über eine Leitung (6) mit einem Absolutdruck von 1,02 bis 1,1 bar geführt.

Die Sauerstoff-Diffusions-Kathode wird über eine Leitung (7) entlüftet. Die Frontseite dieser Kathode wird durch den Katholyten benetzt, dem Prozeßwasser über eine Leitung (8) zugeführt wird und dem die alkalische Peroxid-Endprodukt-Lösung über eine Leitung (9) entnommen wird. Die Anode (2) ist eine mit Iridium aktivierte Streckmetall-Anode aus Titan oder alternativ eine Wasserstoff-Diffusions-Anode, die aus einem Kohlenstoffgewebe besteht, das mit einem Teflon/Ruß-Gemisch beschichtet und zusätzlich mit einem Platin-Katalysator aktiviert ist. Das Kohlenstoffgewebe der Wasserstoff-Diffusions-Anode ist mit der Rückseite gegen ein korrosionsbeständiges Edelstahlblech gepreßt, und die Frontseite ist mit einer protonenleitenden Kationenaustauscher-Membran (z. B. NaFION 117, DuPont, USA) abgedeckt, um den Wasserstoff-Raum der Anode von dem Anolyten zu trennen. Der Wasserstoff wird der Rückseite der Anode mit einem Druck von 1,02 bis zu 1,1 bar an dem Kohlenstoffgewebe zugeführt. Der an der mit Iridium aktivierten Titan-Anode entstehende Sauerstoff wird über eine Leitung (10) zur Sauerstoff-Diffusions-Kathode (1) transportiert. Die NaHSO₄-haltige Lösung strömt über eine Leitung (11) vom Zersetzungstank (12), in den auch die Ausgangsstoffe über eine Leitung (13) eingebracht werden, in die Anodenkammer (5). Der aus der Anodenkammer (5) austretende Anolyt wird über eine Leitung (14) dem Zersetzungstank (12) zugeführt, wobei ein Teilstrom durch eine Leitung (15) als weitere Produkt-Lösung entnommen wird. Die Elektrolyse wird bei Temperaturen von 20 bis 50°C durchgeführt.

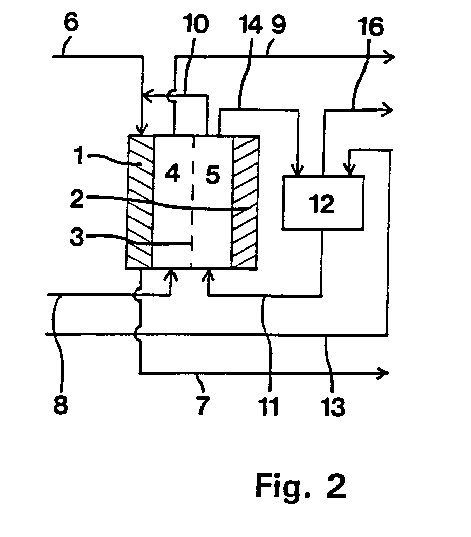

In Fig. 2 ist eine Elektrolysezelle dargestellt, in der gegenüber der Elektrolysezelle der Fig. 1 anstelle eines flüssigen Produktes als zusätzliches Produkt ein gasförmiger Stoff gewonnen wird, der aus dem Zersetzungstank (12) durch die Leitung (16) abgeführt wird. Die Bedeutung der übrigen Bezugsziffern wurde bereits zusammen mit Fig. 1 erläutert.

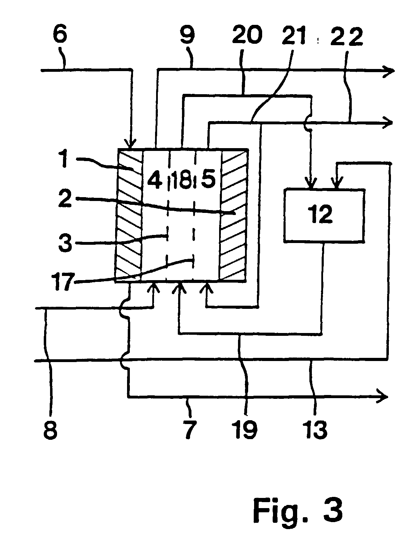

In Fig. 3 ist eine Elektrolysezelle dargestellt, die gegenüber der Elektrolysezelle der Fig. 1 eine zusätzliche Anionenaustauscher-Membran (17) vor der Anode (2) besitzt, wodurch die Anodenkammer zweigeteilt ist und eine Mittelkammer (18) gebildet wird. Die NaHSO₄-haltige Lösung strömt über eine Leitung (19) vom Zersetzungstank (12), in den auch die Ausgangsstoffe über eine Leitung (13) eingebracht werden, in die Mittelkammer (18). Die aus der Mittelkammer (18) austretende Lösung wird über eine Leitung (20) dem Zersetzungstank (12) zugeführt. Der Anolyt strömt über eine Leitung (21) in einem Kreislauf, aus dem eine fast vollständig salzfreie Produkt-Lösung durch eine Leitung (22) entnommen wird.

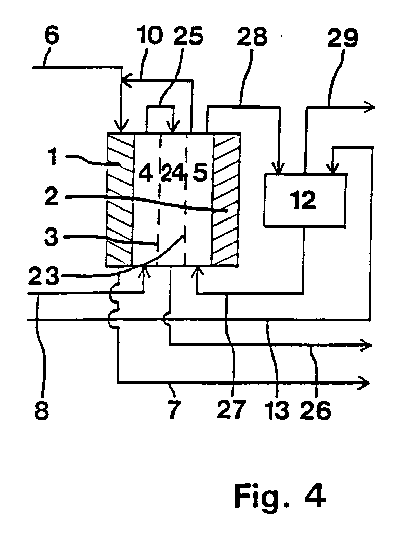

In Fig. 4 ist eine Elektrolysezelle dargestellt, die gegenüber der Elektrolysezelle der Fig. 2 zwischen der Kationenaustauscher-Membran (3) und der Anode (2) eine zusätzliche Kationenaustauscher-Membran (23) aufweist. Dadurch wird die Kathodenkammer zweigeteilt, und es kommt eine zweite Kathodenkammer hinzu, die als Mittelkammer (24) bezeichnet ist. Der Katholyt wird von der Kammer (4) kommend über eine Leitung (25) der Mittelkammer (24) zugeführt und die aus der Mittelkammer austretende Lösung wird über eine Leitung (26) als Produkt der Zelle entnommen. Die NaHSO₄-haltige Lösung strömt über eine Leitung (27) vom Zersetzungstank (12), in den auch die Ausgangsstoffe über eine Leitung (13) eingebracht werden, in die Anodenkammer (5). Die aus der Anodenkammer (5) austretende Lösung wird über eine Leitung (28) dem Zersetzungstank (12) zugeführt, aus dem ein gasförmiger Stoff über eine Leitung (29) als zusätzliches Produkt entnommen wird.

Die Erfindung wird nachfolgend anhand von Beispielen näher beschrieben.

### Beispiel 1 (siehe Fig. 1):

Die Elektrolysezelle besteht aus einer Sauerstoff-Diffusions-Kathode (1), einer Iridium-aktivierten Titan-Anode (2) und einer Kationenaustauscher-Membran (3). Als Anolyt wird eine wässrige schwefelsaure NaHSO₄-Lösung mit 40 g/l H₂SO₄ und 150 g/l Na₂SO₄ über eine Leitung (11) und eine Leitung (14) in einem Kreislauf geführt, in dem ein Zersetzungstank (12) integriert ist, dem über eine Leitung (13) die Na₂SO₄-Ausgangs-Lösung zugeführt wird. Bei einem elektrischen Strom von 10 A pro 100 cm² Elektrodenfläche werden als Produkte 5,1 g/h Peroxid (0,15 mol/h bei einer Stromausbeute von 81 %) und 6,7 g/h NaOH (0,168 mol/h bei einer Stromausbeute von 45 %) im Katholyten gebildet, die über eine Leitung (9) der Zelle entnommen werden. Das entspricht einem NaOH/H₂O₂-Molverhältnis von 1,12. Bei der angelegten Stromdichte von 1 kA/m² stellt sich eine Zellspannung von 2,4 V bei Betrieb mit reinem Sauerstoff an der Gasdiffusions-Kathode und eine Zellspannung von 2,8 V bei Zugabe von Luft an der Gasdiffusions-Kathode ein.

Im Anolyten nimmt die Konzentration von Na₂SO₄ um 12 g/h ab, da 0,168 mol/h Natrium-Ionen und 0,205 mol/h Protonen über die Membran vom Anolyten in den Katolyten transportiert werden. Da gleichzeitig an der Anode 0,373 mol/h Protonen gebildet werden, wird der Anolyt zunächst saurer. Zur Aufrechterhaltung der Na₂SO₄- und der H₂SO₄-Konzentration werden bei einem Elektrolytvolumen von 5 1 dem Zersetzungstank (12) 200 ml/h einer wässrigen Lösung mit einer Na₂SO₄-Konzentration von 210 g/l über eine Leitung (13) zugeführt und gleichzeitig das gleiche Volumen als Produkt-Lösung mit einer Konzentration von 150 g/l Na₂SO₄ und 40 g/l H₂SO₄ aus dem Anolyt-Kreislauf über eine Leitung (15) abgeführt.

### Beispiel 2 und 3 (siehe Fig. 2):

Gegenüber Beispiel 1 wird zur Konstanthaltung der Konzentration der NaHSO₄-Lösung von 150 g/l Na₂SO₄ und 40 g/l H₂SO₄ in den Zersetzungstank (12) 0,045 l/h einer 17 %igen wässrigen Na₂CO₃-Lösung eingegeben. Es entstehen 1,88 l/h (3,7 g/h) CO₂ als zusätzliches Produkt, die vom Zersetzungstank über eine Leitung (16) abgeführt werden.

Wird zur Konstanthaltung der Konzentration der NaHSO₄-Lösung in den Zersetzungstank (12) 0,025 l/h einer 40%igen Na₂SO₃-Lösung eingegeben, so entstehen 1,88 l/h (5,4 g/h) SO₂ als zusätzliches Produkt, die vom Zersetzungstank über eine Leitung (16) abgeführt werden.

### Beispiel 4 (siehe Fig. 3):

Die Elektrolysezelle besteht aus einer Sauerstoff-Diffusions-Kathode (1), einer Iridium-aktivierten Titan-Anode (2), einer Kationenaustauscher-Membran (3) und einer zusätzlichen Anionenaustauscher-Membran (17) (z. B. Typ AMH, Tokuyama Soda, Japan) vor der Anode. Durch die Mittelkammer (18) zwischen Kationen- und Anionenaustauscher-Membran wird eine Lösung aus 150 g/l Na₂SO₄ und 40 g/l H₂SO₄ über eine Leitung (20) und eine Leitung (21) in einem Kreislauf geführt, in dem ein Zersetzungstank (12) integriert ist, dem die Na₂SO₄-Ausgangs-Lösung über eine Leitung (13) zugeführt wird. Der Anolyt strömt über eine Leitung (21) in einem Kreislauf, dem die Lösung von 110 g/l Schwefelsäure über eine Leitung (22) als zusätzliches Produkt entnommen wird. Im Katholyten wird als Produkt eine Lösung mit einer Konzentration von 70 g/l NaOH und 50 g/l Peroxid gebildet, die über eine Leitung (9) der Zelle entnommen wird. Das NaOH/H₂O₂-Molverhältnis beträgt 1,2. Bei einer Stromdichte von 1 kA/m² stellt sich mit Sauerstoff an der Kathode eine Zellspannung von 3,1 V und mit Luft an der Kathode eine Zellspannung von 3,4 V ein.

Wird die Streckmetall-Anode (2) durch eine Wasserstoff-Diffusions-Anode ersetzt, stellt sich bei einer Stromdichte von 1 kA/m² bei Betrieb der Kathode mit Sauerstoff eine Zellspannung von 1,7 V ein. Es erfolgt keine Sauerstoff-Entwicklung an der Anode.

### Beispiel 5 und 6 (Fig. 4):

Die Elektrolysezelle besteht aus einer Sauerstoff-Diffusions-Kathode (1), einer Iridium-aktivierten Titan-Anode (2), einer Kationenaustauscher-Membran (3) und einer zusätzlichen Kationenaustauscher-Membran (23) (z. B. NaFION 324, DuPont, USA) vor der Anode. In die Mittelkammer (24) zwischen beide Kationenaustauscher-Membranen wird der Katholyt über eine Leitung (25) transportiert. Danach wird diese Lösung mit einer Konzentration von 70 g/l NaOH und 50 g/l Peroxid über eine Leitung (26) der Zelle entnommen. Der Anolyt wird über eine Leitung (28) und eine Leitung (27) in einem Kreislauf geführt, in dem ein Zersetzungstank (12) integriert ist, dem die Na₂SO₃-Lösung oder Na₂CO₃-Lösung über eine Leitung (13) zugeführt wird und aus dem gasförmiges SO₂ oder CO₂ als zusätzliches Produkt über eine Leitung (29) entnommen wird. Bei einer Stromdichte von 1 kA/m² stellt sich bei Betrieb der Kathode mit Sauerstoff eine Zellspannung von 3,2 V ein.

## Patentansprüche

1. Verfahren zur Herstellung von wäßriger alkalischer Peroxid-Lösung mit einem Alkali/H₂O₂-Molverhältnis von 0,5 bis 2,5 in einer elektrochemischen Zelle, die eine poröse Sauerstoff-Diffusions-Kathode mit Zufuhr von gasförmigem Sauerstoff, eine Anode und zwischen der Kathode und der Anode eine Kationenaustauscher-Membran aufweist, wobei sich in der Zelle zwischen der Kathode und der Membran eine einen wäßrigen Katholyten enthaltende Kathodenkammer und zwischen der Anode und der Membran eine einen wäßrigen Anolyten enthaltende Anodenkammer befindet, wobei an der Kathode Wasserstoffperoxid gebildet wird und aus der Kathodenkammer ein erster wäßriger Produktstrom abgezogen wird, der Alkalihydroxid und Wasserstoffperoxid enthält, dadurch gekennzeichnet, daß man aus einem außerhalb der Zelle angeordneten Zersetzungstank eine Alkalihydrogensulfat enthaltende wäßrige Lösung in die Anodenkammer leitet und daß man dem Zersetzungstank einen Teil des aus der Anodenkammer abgezogenen, Schwefelsäure enthaltenden Anolyten und einen Ausgangsstoff zuführt, wobei es sich bei dem Ausgangsstoff um eine wäßrige Lösung von
a) Alkalisulfat und/oder Alkalihydrogensulfat oder
b) Alkalisulfit und/oder Alkalihydrogensulfit oder
c) Alkalicarbonat und/oder Alkalihydrogencarbonat
handelt.

2. Verfahren nach Anspruch 1, dadurch gekennzeichnet, daß der Kathodenkammer eine wäßrige Alkalicarbonat- und/oder Alkalihydrogencarbonat-Lösung zugeführt wird, die ein Chelatisierungsmittel enthält.

3. Verfahren nach Anspruch 1 oder 2, dadurch gekennzeichnet, daß die poröse Sauerstoff-Diffusions-Kathode aus einem Kohlenstoffgewebe oder Kohlenstoffvlies mit einer Beschichtung eines Gemisches aus Polytetrafluorethylen und Ruß besteht.

4. Verfahren nach einem der Ansprüche 1 bis 3, dadurch gekennzeichnet, daß als Anode eine Sauerstoff entwickelnde Metallelektrode eingesetzt wird und der an der Anode entstehende Sauerstoff zur Sauerstoff-Diffusions-Kathode geleitet wird.

5. Verfahren nach einem der Ansprüche 1 bis 4, dadurch gekennzeichnet, daß als Anode eine Wasserstoff-Diffusions-Anode verwendet wird, die aus einem Kohlenstoffgewebe oder Kohlenstoffvlies und einem Gemisch aus Polytetrafluorethylen, Ruß und Edelmetall besteht und die mit einer protonendurchlässigen Membran gasdicht abgedeckt ist.

6. Verfahren nach einem der Ansprüche 1 bis 5, dadurch gekennzeichnet, daß die Anodenkammer der Zelle durch eine Anionenaustauscher-Membran zweigeteilt ist und die Mittelkammer zwischen der Kationenaustauscher- und der Anionenaustauscher-Membran von einem aus dem Zersetzungstank kommenden, Schwefelsäure und Natriumhydrogensulfat enthaltenden Elektrolyten durchströmt wird und die zwischen der Mittelkammer und der Anode liegende Kammer von Schwefelsäure durchströmt wird, von der ein Teilstrom als Produkt abgezogen wird.

7. Verfahren nach einem der Ansprüche 1 bis 5, dadurch gekennzeichnet, daß die Kathodenkammer der Zelle durch eine zweite Kationenaustauscher-Membran zweigeteilt ist und der Alkalihydroxid und Wasserstoffperoxid enthaltende Produktstrom von der kathodennahen Kammer kommend durch die kathodenferne Kammer geleitet und dann abgezogen wird.

8. Verfahren nach Anspruch 1, dadurch gekennzeichnet, daß die in die Anodekammer geleitete, Alkalihydrogensulfat enthaltende Lösung einen Gehalt an freier Schwefelsäure zwischen 0 und 30 Gew.-% und einen Gehalt an Alkalisulfat zwischen 1 und 35 Gew.-% aufweist.

9. Verfahren nach Anspruch 1 oder einem der folgenden, dadurch gekennzeichnet,
a) daß als Ausgangsstoff die wäßrige Lösung von Alkalisulfat und/oder Alkalihydrogensulfat oder von Alkalisulfit und/oder Alkalihydrogensulfit verwendet wird, die Soda enthält, wobei die sodahaltige Lösung durch mehrwertige Kationen und sonstige mineralische Komponenten verunreinigt sein kann, und die Lösung einen pH-Wert von 8 bis 13 und eine Salzkonzentration zwischen 10 Gew.-% und der Löslichkeitsgrenze aufweist,
b) daß man die wäßrige Lösung des Ausgangsstoffs vor dem Einleiten in den Zersetzungstank filtriert und das Filtrat mit einem pH-Wert von 8 bis 13 über einen selektiven Kationenaustauscher zur Absorption von zwei- und mehrwertigen Kationen leitet und
c) daß die vom Kationenaustauscher kommende Lösung dem Zersetzungstank zugeführt wird, dem gleichzeitig der aus der Anodenkammer kommende, Schwefelsäure enthaltende Anolyt zugeführt wird und daß nach einer Schwefeldioxid- und/oder Kohlendioxid-Entgasung die gebildete Alkalisulfat und Alkalihydrogensulfat enthaltende Lösung in die Anodenkammer geleitet wird.

10. Verfahren nach Anspruch 9, dadurch gekennzeichnet, daß als Ausgangsstoff für die Herstellung der sodahaltigen Lösung ein sodahaltiges Mineral oder ein sodahaltiger Feststoff verwendet wird, der bei der thermischen Zersetzung von einer zum Bleichen von Papier oder Zellstoff eingesetzten Peroxid-Bleichlauge anfällt.

## Claims

1. A method for the production of aqueous alkaline peroxide solution having a molar ratio of alkali to H₂O₂ of 0.5 to 2.5 in an electrochemical cell, which has a porous oxygen diffusion cathode with a supply of gaseous oxygen, an anode and, between the cathode and the anode, a cation-exchanger membrane, with a cathode chamber containing an aqueous catholyte being located in the cell between the cathode and the membrane and an anode chamber containing an aqueous anolyte being located between the anode and the membrane, with hydrogen peroxide being formed at the cathode and a first aqueous product stream being drawn off from the cathode chamber, which stream contains alkali hydroxide and hydrogen peroxide, characterised in that an aqueous solution containing alkali hydrogen sulphate is passed into the anode chamber from a decomposition tank located outside the cell and that a portion of the anolyte containing sulphuric acid which has been withdrawn from the anode chamber and a starting material are supplied to the decomposition tank, the starting material being an aqueous solution of
a) alkali sulphate and/or alkali hydrogen sulphate, or
b) alkali sulphite and/or alkali hydrogen sulphite, or
c) alkali carbonate and/or alkali hydrogen carbonate.

2. A method according to Claim 1, characterised in that an aqueous alkali carbonate and/or alkali hydrogen carbonate solution which contains a chelating agent is fed to the cathode chamber.

3. A method according to Claim 1 or 2, characterised in that the porous oxygen diffusion cathode consists of a woven or non-woven carbon fabric having a coating of a mixture of polytetrafluoroethylene and carbon black.

4. A method according to one of Claims 1 to 3, characterised in that a metal electrode which evolves oxygen is used as the anode and the oxygen produced at the anode is passed to the oxygen diffusion cathode.

5. A method according to one of Claims 1 to 4, characterised in that a hydrogen diffusion anode is used as anode, which consists of a woven or non-woven carbon fabric and a mixture of polytetrafluoroethylene, carbon black and precious metal and which is covered in gas-tight manner with a proton-permeable membrane.

6. A method according to one of Claims 1 to 5, characterised in that the anode chamber of the cell is divided into two by an anion-exchanger membrane and an electrolyte containing sulphuric acid and sodium hydrogen sulphate and coming from the decomposition tank flows through the central chamber between the cation-exchanger membrane and the anion-exchanger membrane and sulphuric acid flows through the chamber located between the central chamber and the anode, of which a partial stream is withdrawn as product.

7. A method according to one of Claims 1 to 5, characterised in that the cathode chamber of the cell is divided into two by a second cation-exchanger membrane and the product stream containing alkali hydroxide and hydrogen peroxide, coming from the chamber close to the cathode, is passed through the chamber remote from the cathode and is then removed.

8. A method according to Claim 1, characterised in that the solution containing alkali hydrogen sulphate passed into the anode chamber has a content of free sulphuric acid of between 0 and 30% by weight and a content of alkali sulphate of between 1 and 35% by weight.

9. A method according to Claim 1 or one of the following claims, characterised in that
a) the aqueous solution of alkali sulphate and/or alkali hydrogen sulphate, or of alkali sulphite and/or alkali hydrogen sulphite, is used as starting material, which contains soda, the soda-containing solution possibly being contaminated by polyvalent cations and other mineral components, and the solution has a pH value of 8 to 13 and a salt concentration of between 10% by weight and the solubility limit,
b) the aqueous solution of the starting material is filtered before introduction into the decomposition tank and the filtrate having a pH value of 8 to 13 is passed across a selective cation-exchanger for absorption of bivalent and polyvalent cations, and
c) the solution coming from the cation-exchanger is fed to the decomposition tank, to which the anolyte containing sulphuric acid, coming from the anode chamber, is simultaneously fed, and that after sulphur dioxide and/or carbon dioxide degassing the resulting solution containing alkali sulphate and alkali hydrogen sulphate is passed into the anode chamber.

10. A method according to Claim 9, characterised in that a soda-containing mineral or a soda-containing solid is used as starting material for the production of the soda-containing solution, which mineral or solid is produced upon the thermal decomposition of a peroxide bleaching liquor used for bleaching paper or pulp.

## Revendications

1. Procédé de préparation d'une solution aqueuse alcaline de peroxyde, ayant un rapport molaire métal alcalin/H₂O₂ de 0,5 à 2,5 dans une cellule électrochimique qui comporte une cathode poreuse de diffusion de l'oxygène avec amenée d'oxygène gazeux, une anode et, entre la cathode et l'anode, une membrane échangeuse de cations, un compartiment cathodique renfermant un catholyte aqueux se trouvant dans la cellule entre la cathode et la membrane et un compartiment anodique contenant un anolyte aqueux se trouvant dans la cellule entre l'anode et la membrane, du peroxyde d'hydrogène étant formé à la cathode et un premier courant aqueux, qui renferme de l'hydroxyde de métal alcalin et du peroxyde d'hydrogène, étant soutiré du compartiment cathodique, caractérisé en ce que l'on envoie d'une cuve de décomposition disposée à l'extérieur de la cellule, une solution aqueuse renfermant de l'hydrogénosulfate de métal alcalin au compartiment anodique et en ce que l'on envoie à la cuve de décomposition une partie de l'anolyte soutirée du compartiment anodique et contenant de l'acide sulfurique et une matière première, celle-ci étant une solution aqueuse de :
a. sulfate de métal alcalin et/ou hydrogénosulfate de métal alcalin ou
b. sulfite de métal alcalin et/ou hydrogénosulfite de métal alcalin ou
c. carbonate de métal alcalin et/ou hydrogénocarbonate de métal alcalin.

2. Procédé suivant la revendication 1, caractérisé en ce que ce que l'on envoie au compartiment cathodique une solution aqueuse de carbonate de métal alcalin et/ou d'hydrogénocarbonate de métal alcalin qui renferme un agent de chélation.

3. Procédé suivant les revendications 1 ou 2, caractérisé en ce que la cathode poreuse de diffusion de l'oxygène est constituée d'un tissu de carbone ou d'un non tissé de carbone revêtu d'un mélange de polytétrafluoroéthylène et de suie.

4. Procédé suivant l'une des revendications 1 à 3, caractérisé en ce que l'on utilise comme anode une électrode métallique dégageant de l'oxygène et l'on envoie de l'oxygène créé à l'anode à la cathode de diffusion de l'oxygène.

5. Procédé suivant l'une des revendications 1 à 4, caractérisé en ce que l'on utilise comme anode une anode de diffusion d'hydrogène qui est constituée d'un tissu de carbone ou d'un non tissé de carbone et d'un mélange de polytétrafluoroéthylène de suie et de métal précieux et qui est recouvert de manière étanche au gaz d'une membrane perméable aux protons.

6. Procédé suivant l'une des revendications 1 à 5, caractérisé en ce qu'on divise en deux le compartiment anodique de la cellule par une membrane échangeuse d'anions et on fait passer dans le compartiment intermédiaire, compris entre la membrane échangeuse de cations et la membrane échangeuse d'anions, un électrolyte provenant de la cuve de décomposition et contenant de l'acide sulfurique et de l'hydrogénosulfate de sodium et l'on fait passer dans le compartiment, compris entre le compartiment intermédiaire et l'anode, de l'acide sulfurique dont on soutire un courant partiel en tant que produit.

7. Procédé suivant l'une des revendications 1 à 5, caractérisé en ce que l'on divise en deux le compartiment cathodique de la cellule par une deuxième membrane échangeuse de cations et l'on envoie le courant de produit contenant de l'hydroxyde de métal alcalin et du peroxyde d'hydrogène provenant du compartiment proche de la cathode dans le compartiment éloigné de la cathode et on l'en soutire.

8. Procédé suivant la revendication 1, caractérisé en ce que la solution envoyée dans le compartiment anodique et contenant de l'hydrogénosulfate de métal alcalin a une teneur en acide sulfurique libre comprise entre 0 et 30 % en poids et une teneur en sulfate de métal alcalin comprise entre 1 et 35 % en poids.

9. Procédé suivant la revendication 1 ou l'une des suivantes, caractérisé en ce que
a. on utilise comme matière première la solution aqueuse de sulfate de métal alcalin et/ou d'hydrogénosulfate de métal alcalin ou de sulfite de métal alcalin et/ou d'hydrogénosulfate de métal alcalin qui contient du carbonate de sodium, la solution contenant du carbonate de sodium pouvant être polluée par des cations plurivalents et d'autres constituants minéraux et la solution ayant un pH allant de 8 à 13 et une concentration de sel comprise entre 10% en poids et la limite de solubilité,
b. on filtre la solution aqueuse de la matière première avant de l'envoyer à la cuve de décomposition et on envoie le filtrat alors qu'il a un pH de 8 à 13 sur un échangeur de cations sélectif pour l'absorption de cations bivalents et plurivalents et
c. on envoie la solution provenant de l'échangeur de cations à la cuve de décomposition, à laquelle on envoie en même temps l'anolyte provenant du compartiment anodique et contenant de l'acide sulfurique et, après un dégagement de dioxyde de soufre et/ou de dioxyde de carbone, on envoie au compartiment anodique la solution formée contenant du sulfate de métal alcalin et de l'hydrogénosulfate de métal alcalin.

10. Procédé suivant la revendication 9, caractérisé en ce que l'on utilise comme matière première pour la préparation de la solution contenant du carbonate de sodium, un produit minéral contenant du carbonate de sodium ou une matière solide contenant du carbonate de sodium, qui se produit lors de la décomposition thermique d'une lessive de lixiviation au peroxyde utilisée pour le blanchiment du papier ou de la pâte de cellulose.
